# EUROPEAN PATENT SPECIFICATION

(11) **EP 3 293 925 B1**
(45) Date of publication and mention of the grant of the patent: **13.12.2023**
(21) Application number: 17180742.3
(22) Date of filing: 12.10.2007
(51) Int. Cl.: H04L 9/40, H04L 51/56

(54) **A NETWORK STORAGE SYSTEM AND A CONTROL METHOD FOR ACCESSING THE NETWORK STORAGE CONTENT**
NETZWERKSPEICHERSYSTEM UND STEUERUNGSVERFAHREN ZUM ZUGRIFF AUF NETZWERKSPEICHERINHALTE
SYSTÈME DE STOCKAGE DE RÉSEAU ET PROCÉDÉ DE COMMANDE POUR ACCÉDER AU CONTENU DE STOCKAGE DE RÉSEAU

(30) Priority: 13.10.2006 CN 200610140898
(43) Date of publication of application: 14.03.2018
(62) Divisional of application: 07816553.7
(73) Proprietor: HUAWEI TECHNOLOGIES CO., LTD., Shenzhen Guangdong 518129 (CN)
(72) Inventor: ZHANG, Liming, Shenzhen, Guangdong, 518129 (CN)
(74) Representative: Pfenning, Meinig & Partner mbB

(56) References cited:
- WO-A1-2006/024230
- US-A- 5 931 947

## Description

### Field of the Invention

The present invention relates to the technical field of communication, particularly to a network storage system and a method for access control of network stored content in message services.

### Background of the Invention

With the development of telecommunication services, more and more message services appear, such as Short Message Service (SMS), Multimedia Message Service (MMS), and Instant Message (IM). In practical applications, typical IMs include mobile IM, Internet-based IM, Push-to-talk over Cellular (PoC) service which can concurrently support voice and multimedia messages, and Email service frequently used in daily life. Therefore, the message services have been one of the important services in current telecommunication and internet services, and it can be predicted that the message services would be one of the key services in the future Next Generation Network (NGN)/ Next Generation Mobile Network (NGMN).

In consideration of the importance of the message services, how to continuously enhance the user experience of the message services, to simplify the implementing solutions of the message services and to protect the existing investment of operators is becoming a hot issue in the industry. Presently, the Open Mobile Alliance (OMA) standard organization has founded the Converged IP Messaging (CPM) workgroup, which is dedicated to the study and constitution of CPM related standards.

In the CPM solution, a technical solution of network storage is proposed, which is described as follows:
A user has a personal network storage space, which can store not only messages of the user, but also media files of the user.

The user can store various messages in the network storage space, including received messages, sent messages, messages saved as draft, and session messages such as the messages sent and received during a message chat between the user and his friend.

If the user stores media files in the network storage space, the user may store received media files in the network storage space and upload media files collected from other spaces to the network storage space. The media files may be audio files, graphics files, video files, etc. Usually, the CPM client of the user can not store many media files because of the restriction of its memory and processing speed. Therefore, the media files are stored in the network, which facilitates the management and utilization of the media files. The user can access his media content as long as the service can be accessed in any manner. In the management method, the network storage space can provide a Web management interface, so that the user can conveniently manage his network storage space via a device such as a PC. For example, the user uploads his favourite graphics files/audio files to the network server, deletes out-of-date or obsolete messages and media files, classifies disordered messages and media files.

The synchronization of key information between the CPM client of the user and the network storage system may be implemented. For example, the summary information of the messages and media files stored in the network storage space may be synchronized to the CPM client, so that the CPM client can clearly know the messages and media files stored in the network storage system.

The usual cases using the network storage are described as follows.
1. A user, via settings, instructs a CPM server to store new messages in a network storage space, and only a simple message indication is sent to the receiver. The receiver can decide whether to obtain the complete information of the message in accordance with the indication information of the message. This manner can reduce the traffic volume and avoid downloading the messages which the user is not interested in.
2. A user, through uploading some favourite audio files/graphics files/video files to his personal network storage space, can request the server to send a CPM message containing specific media files to his friend if the user desires to share the files with others, thereby the media sharing can be realized.

The above description is for typical application situations of the network storage. Besides the CPM service, the network storage is used in many other services. For example, the PoC Box in PoC service is a kind of network storage.

In the above technical solution of the prior art, the network storage may store not only the received and sent messages of the user, but also the media files collected by the user. However, only those users who belong to the network storage space can access the stored content and others can not perform an access. The access control of the network stored objects can not be supported efficiently. And the sharing of the media files can not be supported sufficiently.

In addition, a user can not access the network storage of another user, which results in the low system efficiency of media sharing. For example, the CPM server of sender B needs to embed the shared media in a message and send the message together with the media file, which apparently reduces the efficiency.

Furthermore, it is absent for the efficient management of the network stored objects in the prior art.
US 5931947 discloses a network storage device is disclosed for use in a secure array of such devices to support a distributed file system. Each device is an independent repository of remotely encrypted data objects to be accessed by authorized network clients. All encryption is done by the clients, rather than by the devices. In order for the system to revoke access to an object on the device, the object must be re-encrypted. Each storage device has a device owner for controlling access to the device's data. All data requests from the clients and responses to them are authenticated using keys derived from the owner key and hashed message authentication codes.
WO 2006/024230 discloses an online file storage user data server transmits the information of the sharing file and information of the sharing user in the file sharing data information to the IM client used by the shared user via the online file storage access server, to display the information of the sharing user and the sharing folder shared by the sharing user on the online file storage operation interface of the IM client.

### Summary of the Invention

Embodiments of the present invention are to provide a network storage system and a method for access control of network stored content, so as to solve the problem of singleness and low-efficiency of the access solution of the network stored objects in the prior art.

A method for controling access network stored content, wherein the method is performed in a network storage system used in a message service, wherein the method comprises: receiving (1001), by the network storage system, a creating request for creating a shared folder sent by a first user; storing (1001), by the network storage system, an access rule of the shared folder to permit a second user to write in the shared folder, wherein the access rule of the shared folder is set by the first user; receiving(1003), by the network storage system, an upload request from the second user to upload a media content to the shared folder; permiting (1004), by the network storage system, uploading the media content to the shared folder according to the access rule after succeeded authentication;
storing (1004), by the network storage system, the media content shared by the sencond user in the shared folder; receiving (1005), by the network storage system, an obtain request for obtaining the media content in the shared folder sent by the first user; providing (1006), by the network storage system, the media content to the first user. Moreover, a network storage system for executing the above method is provided

The solutions according to the embodiments of the present invention can realize the flexible sharing and utilization of the network stored objects, which improves the user experience and the processing efficiency of some service situations.

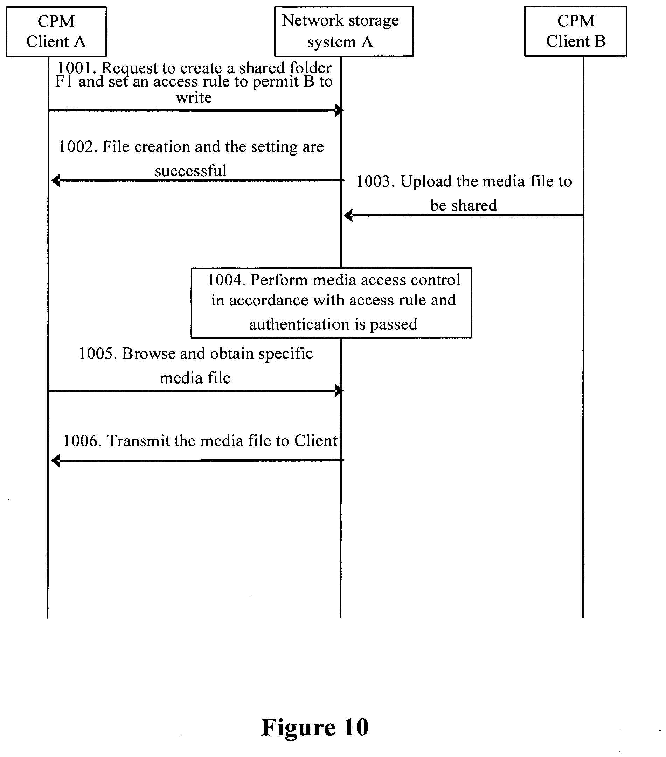

The embodiment of figure 10 falls under the scope of the claims. All the other embodiments do not fall under the scope of the claims. They are however retained, being useful examples to better understand the invention.

### Brief Description of the Drawings

Figure 1 is a schematic diagram illustrating the architecture of a network storage system according to an embodiment of the present invention;
Figure 2-Figure 4 are schematic diagrams illustrating the architectures of network storage systems in detail according to embodiments of the present invention;
Figure 5 is a schematic diagram illustrating the network storage system according to an embodiment of the present invention, which is implemented by using a CPM system in the embodiment of the present invention;
Figure 6 is a general flow chart illustrating an access control method of a network stored content according to an embodiment of the present invention;
Figure 7 is a specific flow chart illustrating a network storage control unit controlling a network storage access request according to an embodiment of the present invention;
Figure 8 is a flow chart of case 1 in the embodiment of the present invention;
Figure 9 is a flow chart of case 2 in the embodiment of the present invention; and
Figure 10 is a flow chart of case 3 in the embodiment of the present invention.

### Detailed Description of the Invention

The embodiments of the present invention are described in detail with reference to the attached drawings as follows.

A network storage system according to an embodiment of the present invention is used in message services, including SMS, MMS, IM, Mobile IM, Internet-based IM, Push-to-talk over Cellular (PoC) service supporting voice and multimedia messages concurrently, Email service, and CPM service.

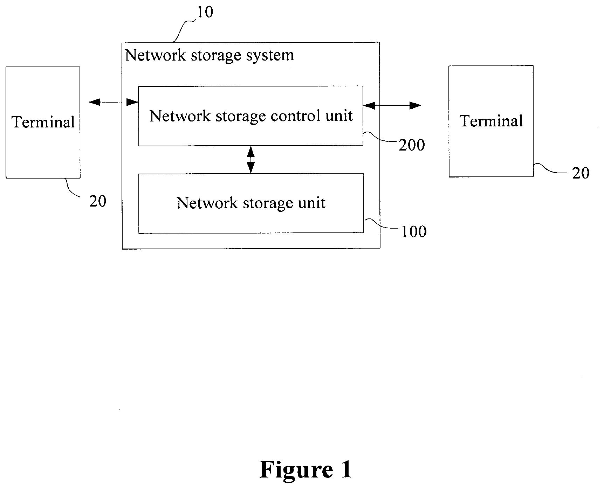

Figure 1 is a schematic diagram illustrating the architecture of the network storage system according to the embodiment of the present invention. Figure 1 illustrates the network storage system 10.

A network storage unit 100 is adapted to provide a storage space. The specific stored content includes the message object, the file object, the sub-folder object. The stored content is an access control object and also an object to be accessed.

A network storage control unit 200, connected with the network storage unit 100, contains an access rule set in it, and serves as the entity for network storage control at network side. Generally, the network storage control unit 200 may be a part of a CPM server, and alternatively may be separated from the CPM server in practical implementation.

In this embodiment, the network storage control unit 200 receives an access request from a terminal 20, and processes the access request in accordance with the set access rule.

The access request may be initiated by one of the following entities:

The owner of the network storage space, which is the entity owning a network storage space and may be implemented as a user or a client, such as a CPM user, a CPM client, and an application programme;

The visitor of the network storage space, which is the object accessing the network storage and may be implemented as a user or a client, such as a CPM user, a CPM client, and an application programme.

In the solution of an embodiment of the present invention, the owner of the network storage space and the visitor of the network storage space may be the same object or different objects. If the owner of the network storage space and the visitor of the network storage space are the same object, it indicates that a user accesses his own network stored object. If the owner of the network storage space and the visitor of the network storage space are different objects, it indicates that a user or an application programme accesses a network stored object not belonging to it.

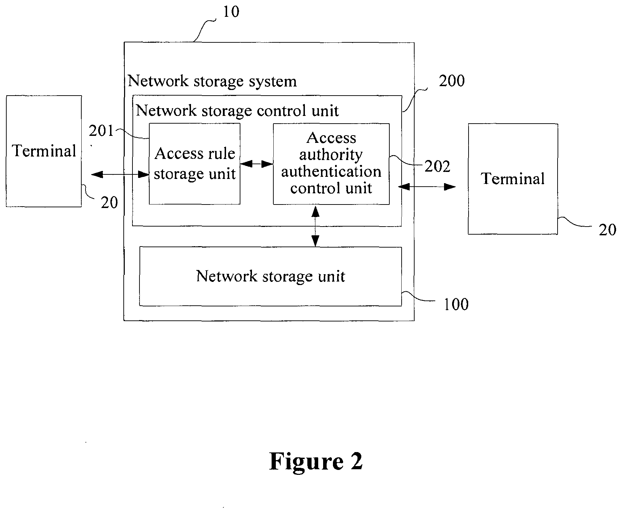

The network storage control unit may be further illustrated in detail as in Figure 2, including:
an access rule storage unit 201, adapted to store the access rule;
an access authority authentication control unit 202, connected with the access rule storage unit 201, adapted to perform an authentication control of the access request in accordance with the access rule.

In the above access rule storage unit 201 according to an embodiment of the present invention, one or the combination of the following access rules (public level) may be set.

Only the owner of the network storage space is permitted to perform an access (private), i.e., the network storage space is set as completely private and only the owner can access it. This level may be default in a specific solution.

All users can perform an access (public), i.e., the network storage space is public and all users can access it.

Specified users can perform an access (friend), i.e., specified users can access the network storage space. The users which are authorized to perform an access may be specified by a list or an access permission list given by a wildcard or a regular expression, or the access authority set via password which is used during an access.

Specified users can not perform an access, which is called black and white list setting, i.e., the black and white lists for access of an object are set, and users in the black list are prohibited from performing any access.

Some list examples are as follows:
List 1 (Specifying the users that are permitted to perform an access)

| Public level | Friend |
|---|---|
| Access permission list | UserA, UserB, UserC, Group D |

In list 1, only UserA, UserB, UserC and users in GroupD can access the specified stored object.

### List 2 (Using wildcard and regular expression)

| Public Level | Friend |
|---|---|
| Access permission list | UserA, *.domain.com , ^[a-zA-Z0-9_]{6,}$@domain.com |

In list 2, besides UserA, any user whose username is ended with ".domain.com" and any user whose username is a string consisting of more than six characters of letters, numbers or underlines in "domain.com" can access the specified stored object. (The ^[a-zA-Z0-9_]{6,} is a regular expression, indicating that a string consisting of more than six characters of letters, numbers, or underlines.)

### List 3 (Black and white lists)

| | |
|---|---|
| Black List | User A, User B, User C, *@domain.com |
| White List | User D, Group E, *@mobile.com |

In list 3, the users in the black list can not perform an access while the users in the white list can perform an access.

In the practical implementation, the above manners may be combined to use, such as setting not only the public level but also the black and while lists.

In the access rule storage unit 201, operations on a stored object may be set as follows according to an embodiment of the present invention.

The operation definitions of a stored object in the storage space serve as the access rule (Read and Write authority restriction):
A Read-only operation can be performed on the stored object: the visitor can perform a Read operation on the accessed network stored object, i.e. a Read-only operation but no Modify operation can be performed on this object;
A Write operation can be performed on the stored object, i.e., the visitor can perform a Write operation on the accessed stored object;
A Delete operation can be performed on the stored object, i.e., the visitor can perform a Delete operation on the accessed stored object;
A Modify operation can be performed on the stored object, i.e., the visitor can perform a Modify operation on the accessed network stored object.

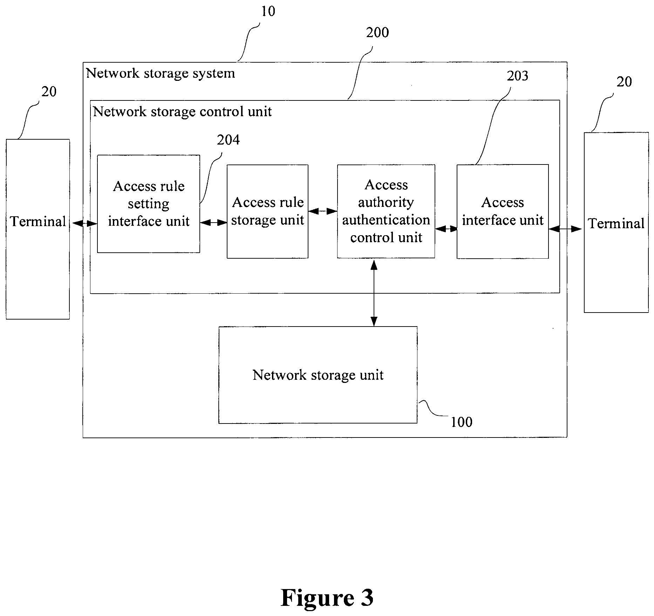

As shown in Figure 3, the network storage control unit further includes:
An access interface unit 203, connected with the access authority authentication control unit 202, and adapted to receive the access request from the terminal 20 and send the access request to the access authority authentication control unit 202; the access to the specific network stored object can be requested via the interface, such as requesting to query, delete or add a specific stored object;

An access rule setting interface unit 204, connected with the access rule storage unit 201, and adapted to provide an access rule setting interface, via which the owner of the network storage space or an authorized user can set the access rule for the network stored object.

The above access rule may be set via a Web interface or be set by the terminal via a command.

In the above solution, the access interface unit 203 and the access rule setting interface unit 204 may be configured to integrate with each other, so that the network storage control unit can receive the access request and the access rule setting command via a universal interface.

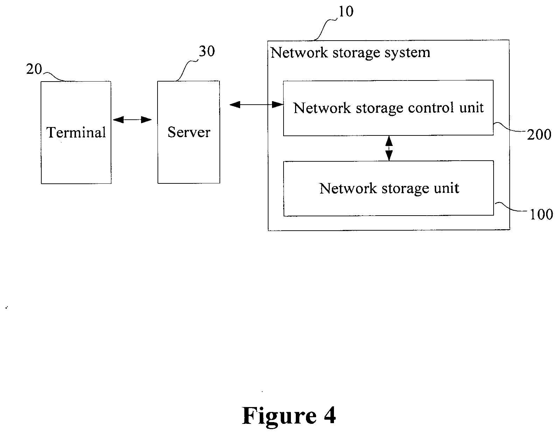

As illustrated in Figure 4, a server 30 may be set between the network storage system 10 and the terminal 20, so as to manage the terminal.

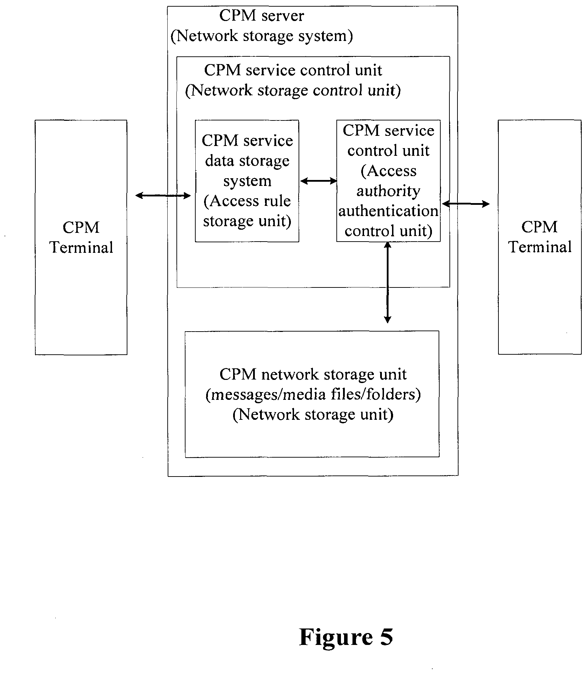

Figure 5 is a schematic diagram illustrating the architecture of the system of an embodiment of the present invention applied in the CPM service. As illustrated in Figure 5, the network storage system may be implemented on a CPM server.

Correspondingly, the network storage system according to the embodiment of the present invention is a CPM server.

The network storage unit is a CPM network storage unit, adapted to store Converged IP Messaging (CPM) service related messages, and/or media files, and/or folders storing these objects.

The network storage control unit is a CPM service control unit.

The access rule storage unit is a CPM service data storage system.

If the embodiment of the present invention is applied in other message services such as SMS, MMS, IM, Mobile IM, Internet-based IM, PoC service, and Email service, the process is similar with that described above.

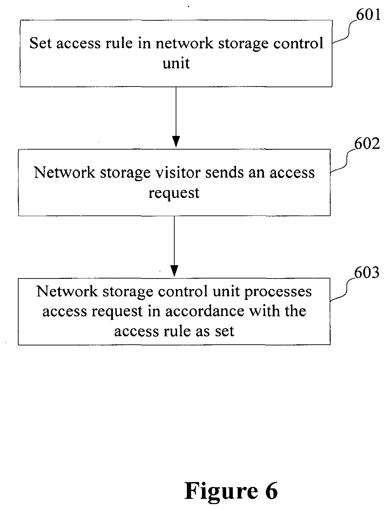

Figure 6 is a general flow chart illustrating an access control method of a network stored content according to this embodiment. As illustrated in Figure 6, the method includes the processes as follows.
Process 601: an access rule is set in the network storage control unit;

The owner of the network storage space or an authorized user sets the access rule for the network stored object in the network storage control unit via the access rule setting interface unit.

Process 602: A visitor sends an access request.

The visitor, in accordance with its personal requirements, performs an access operation on the specific network stored object via an access interface unit, such as requesting to query, delete or add a specific stored object.

In this process, the user initiating the access request may be the owner of the network storage space or a user that is not the owner of the network storage space.

Process 603: The network storage control unit processes the access request in accordance with the access rule as set.

The network storage control unit processes the access request from the network storage visitor in accordance with the access rule set by the user, such as performing authentication and control; if the authentication is passed, it is permitted to perform a corresponding operation or the requested stored object is sent to the visitor, such as query, deleting, and adding; if the authentication is not passed, the corresponding operation is rejected.

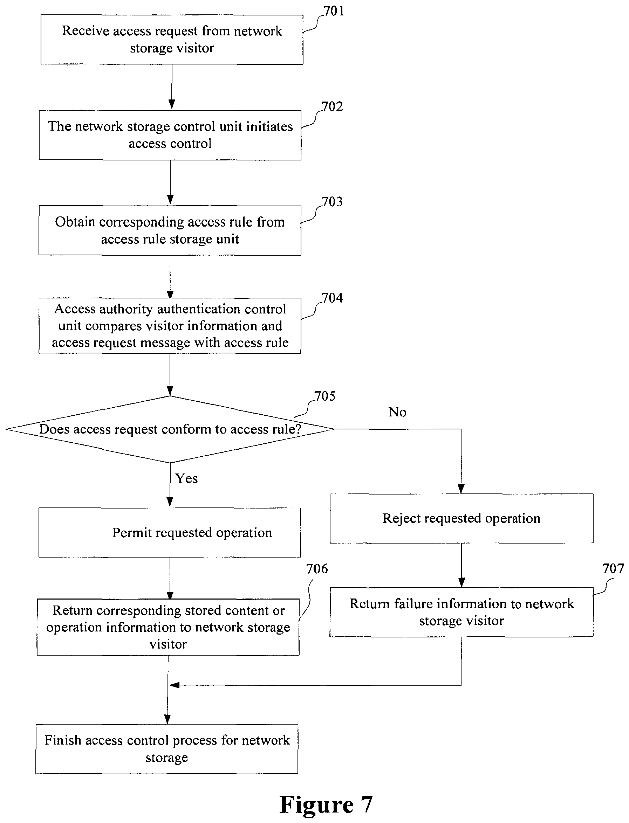

Figure 7 is a specific flow chart illustrating the network storage control unit controlling a network storage access request according to an embodiment of the present invention, which mainly includes the processes as follows.

Process 701: The network storage control unit receives an access request from the visitor of a network stored object.

Process 702: The network storage control unit initiates an access control procedure.

Process 703: The network storage control unit obtains a corresponding access rule from the access rule storage unit.

Process 704: The access authority authentication control unit compares the visitor information and the access request message with the access rule.

Process 705: It is determined whether the information on the access request initiator and the access request conform to the access rule as set; if yes, the procedure goes to process 706; otherwise, the procedure goes to process 707.

Process 706: The corresponding network stored content, e.g. the message/media information, is returned to the network storage visitor, or operations such as deleting and modifying are performed.

Process 707: Failure information is returned to the network storage visitor.

Several specific examples are described as follows.

### Example 1

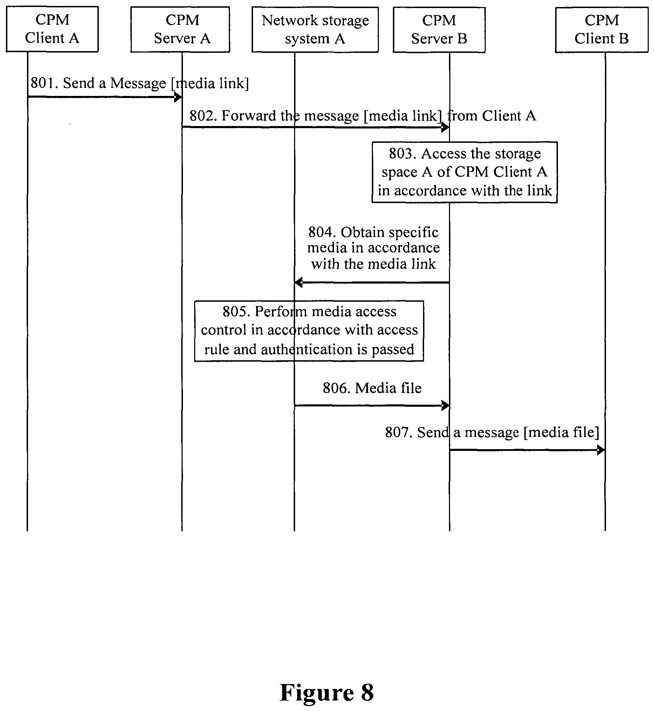

Figure 8 is a schematic flow chart of example 1, in which a user A sends a message containing a media link via a CPM Client A, and the CPM Server of a user B accesses the shared media content of the user A via the link and forwards the content to the user B. The procedure includes the processes as follows:
Process 801: The CPM Client A sends a message to the CPM Server A, the message carrying a media link pointing to a media file in the network storage system A of the user A.
Process 802: The CPM Server A sends the message carrying the media link to a CPM Server B.
Process 803: The CPM Server B shall replace the media link in the message with specific media in accordance with the local policy (such as replace the media link with specific media) of the server.
Process 804: The CPM Server B sends an access request (media obtaining request) to the network storage system A.
Process 805: The network storage system A determines whether to permit the obtaining of the media content in accordance with the access rule (the determined result is to permit the obtaining in this example).
Process 806: The network storage system A returns the specific media to the CPM Server B.
Process 807: The CPM Server B embeds the media obtained from the network storage system in a message which will be sent to the CPM Client B, and send the message to the CPM Client B.

### Example 2

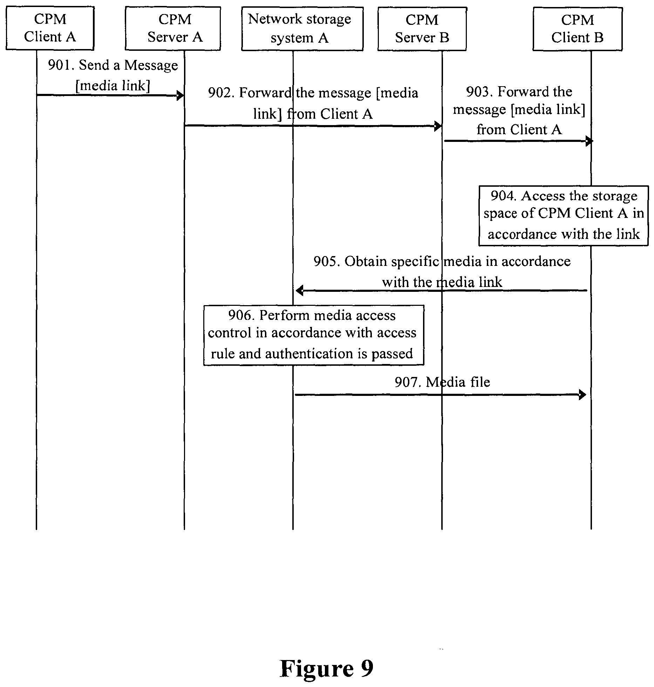

As illustrated in Figure 9, a user A sends a message containing a media link via a CPM Client A, and a CPM Client B of a user B accesses the shared content of the CPM Client A via the link. The procedure includes the processes as follows:
Process 901: The CPM Client A sends to the CPM Server A a message request containing a media link pointing to a media file in the network storage system A of the user A.
Process 902: The CPM Server A sends the message request carrying the media link to the CPM Server B.
Process 903: The CPM Server B sends the message request carrying the media link to the CPM Client B.
Process 904: The CPM Client B requests of the network storage system A a specific media in accordance with the media link in the message.
Process 905: The CPM Client B sends a media obtaining request to the network storage system A.
Process 906: The network storage A determines whether to permit the obtaining of the media content in accordance with the access rule (the determined result is to permit the obtaining in this example).
Process 907: the network storage system A returns the specific media to the CPM Client B.

### Example 3

In Figure 10, a user A accesses the media folder of a user B via a CPM Client A to share the media content of the user B. The procedure includes the processes as follows:
Process 1001: The CPM Client A requests the network storage system A to create a shared folder, and sets an access rule to permit the user B to write.
Process 1002: The network storage system A returns a message indicating the folder creation success to the CPM Client A.
Process 1003: The CPM Client B requests to upload the media which is desired to be shared with the user A to the network storage system A.
Process 1004: The network storage system A determines whether to permit the CPM Client B to add the media content in accordance with the access rule (the determined result is to permit the media adding in this example); and the CPM Client B adds in the network storage system A the desired media for the user B to be shared successfully.
Process 1005: The CPM Client A requests to obtain the media in the network storage system A.
Process 1006: The network storage system A returns the specific media to the CPM Client A.

It should be understood from the above description of the embodiments of the present invention that, in the solutions of the embodiments of the present invention, the owner of a network storage system may set the access authority for one of his stored objects, and set the access control authority in the form of black and white lists, so that authorized users and applications may access a stored object, to implement the sharing. In addition, in the embodiments of the present invention, the user who is not the owner of the network storage space may send only the link of the media and summary information, so that the CPM server of the receiver or the receiver terminal obtains the media from the network storage space of user B as required, thereby the efficiency is improved.

In the embodiments of the present invention, the network storage unit and the network storage control unit are not necessarily separate but integrated. The network storage control unit and the network storage unit are not necessarily directly connected but communicated with each other with the same function as in the case of direct connection. The access rule may be set in the network storage control unit or in another network entity.

## Claims

1. A method for controling access network stored content, wherein the method is performed in a network storage system used in a message service, wherein the method comprises:
receiving (1001), by the network storage system, a creating request for creating a shared folder sent by a first user;
storing (1001), by the network storage system, an access rule of the shared folder to permit a second user to write in the shared folder, wherein the access rule of the shared folder is set by the first user;
receiving(1003), by the network storage system, an upload request from the second user to upload a media content to the shared folder;
permiting (1004), by the network storage system, uploading the media content to the shared folder according to the access rule after succeeded authentication;
storing (1004), by the network storage system, the media content shared by the second user in the shared folder;
receiving (1005), by the network storage system, an obtain request for obtaining the media content in the shared folder sent by the first user;
providing (1006), by the network storage system, the media content to the first user.

2. The method according to claim 1, wherein the method further comprises:
creating (1001), by the network storage system, a shared folder for the first user.

3. The method according to claim 2, wherein the method further comprises:
sending (1002), by the network storage system, a message indicating the folder creation success to the first user.

4. The method according to any one of claims 1-3, wherein the access rule further comprises any one or a combination of the following items:
accessible only by the owner of a network storage space;
Read-only operation available to network stored content;
Write operation available to network stored content;
Delete operation available to network stored content; and
Modify operation available to network stored content.

5. The method according to any one of claims 1-4, wherein the access request comprises any one or a combination of the following items:
Read request;
Write request;
Delete request; and
Modify request.

6. The method according to any one of claims 1-5, wherein permiting uploading the media content to the shared folder according to the access rule after succeeded authentication further comprises:
comparing the information of the second user sending the upload rquest and the upload request message with the access rule; and
permitting the upload request when the informaiton on the user and the request message are consistent with the access rule.

7. The method according to any one of claims 1-6, wherein permiting uploading the media content to the shared folder according to the access rule after succeeded authentication further comprises: permiting uploading the media content to the shared folder when authenticating a password provided by the second user is successful.

8. The method according to any one of claims 1-7, wherein the method is used in a CPM message service.

9. The method according to any one of claims 1-8, wherein the first user communicate with the network storage system via a terminal client.

10. The method according to any one of claims 1-9, wherein the method is used in an Instant Message service.

11. A network storage system (10), used in message services, wherein the system comprises means for carrying out the method according to any one of claims 1-10.

## Patentansprüche

1. Verfahren zum Kontrollieren des Zugriffs auf netzwerkgespeicherten Inhalt, wobei das Verfahren in einem Netzwerk-Speicherungssystem ausgeführt wird, das in einem Mitteilungsdienst verwendet wird, wobei das Verfahren Folgendes umfasst:
Empfangen (1001) einer Erzeugungsanforderung zur Erzeugung eines geteilten Ordners, die durch einen ersten Benutzer gesendet wird, durch das Netzwerk-Speicherungssystem;
Speichern (1001) einer Zugriffsregel des geteilten Ordners durch das Netzwerk-Speicherungssystem, um es einem zweiten Benutzer zu gestatten, in den geteilten Ordner zu schreiben, wobei die Zugriffsregel des geteilten Ordners durch den ersten Benutzer gesetzt wird;
Empfangen (1003) einer Hochladeanforderung von dem zweiten Benutzer durch das Netzwerk-Speicherungssystem, zum Hochladen eines Medieninhalts in den geteilten Ordner;
Gestatten (1004), durch das Netzwerk-Speicherungssystem, des Hochladens des Medieninhalts in den geteilten Ordner gemäß der Zugriffsregel nach erfolgreicher Authentifizierung;
Speichern (1004) des durch den zweiten Benutzer geteilten Medieninhalts in dem geteilten Ordner durch das Netzwerk-Speicherungssystem;
Empfangen (1005) einer Erhalteanforderung zum Erhalten des Medieninhalts in dem geteilten Ordner, die durch den ersten Benutzer gesendet wird, durch das Netzwerk-Speicherungssystem;
Bereitstellen (1006) des Medieninhalts für den ersten Benutzer durch das Netzwerk-Speicherungssystem.

2. Verfahren nach Anspruch 1, wobei das Verfahren ferner Folgendes umfasst:
Erzeugen (1001) eines geteilten Ordners für den ersten Benutzer durch das Netzwerk-Speicherungssystem.

3. Verfahren nach Anspruch 2, wobei das Verfahren ferner Folgendes umfasst:
Senden (1002) einer den Ordnererzeugungserfolg angebenden Nachricht zu dem ersten Benutzer durch das Netzwerk-Speicherungssystem.

4. Verfahren nach einem der Ansprüche 1-3, wobei die Zugriffsregel ferner einen beliebigen oder eine Kombination der folgenden Posten umfasst:
nur dem Eigentümer eines Netzwerk-Speicherungsplatzes zugänglich;
Nur-Lese-Operation für Netzwerk-gespeicherten Inhalt verfügbar;
Schreiboperation für Netzwerk-gespeicherten Inhalt verfügbar;
Löschoperation für Netzwerk-gespeicherten Inhalt verfügbar; und
Modifizieroperation für Netzwerk-gespeicherten Inhalt verfügbar.

5. Verfahren nach einem der Ansprüche 1-4, wobei die Zugriffsanforderung einen beliebigen oder eine Kombination der folgenden Posten umfasst:
Leseanforderung;
Schreibanforderung;
Löschanforderung; und
Modifizieranforderung.

6. Verfahren nach einem der Ansprüche 1-5, wobei Gestatten des Hochladens des Medieninhalts in den geteilten Ordner gemäß der Zugriffsregel nach erfolgreicher Authentifizierung ferner Folgendes umfasst:
Vergleichen der Informationen des die Hochladeanforderung sendenden zweiten Benutzers und der Hochladeanforderungsnachricht mit der Zugriffsregel; und
Gestatten der Hochladeanforderung, wenn die Informationen über den Benutzer und die Anforderungsnachricht mit der Zugriffsregel vereinbar sind.

7. Verfahren nach einem der Ansprüche 1-6, wobei Gestatten des Hochladens des Medieninhalts in den geteilten Ordner gemäß der Zugriffsregel nach erfolgreicher Authentifizierung ferner Folgendes umfasst:
Gestatten des Hochladens des Medieninhalts in den geteilten Ordner, wenn Authentifizieren eines durch den zweiten Benutzer bereitgestellten Passworts erfolgreich ist.

8. Verfahren nach einem der Ansprüche 1-7, wobei das Verfahren in einem CPM-Mitteilungsdienst verwendet wird.

9. Verfahren nach einem der Ansprüche 1-8, wobei der erste Benutzer über einen Endgeräte-Client mit dem Netzwerk-Speicherungssystem kommuniziert.

10. Verfahren nach einem der Ansprüche 1-9, wobei das Verfahren in einem Instant-Message-Dienst verwendet wird.

11. Netzwerk-Speicherungssystem (10), das in Mitteilungsdiensten verwendet wird, wobei das System Mittel zum Ausführen des Verfahrens nach einem der Ansprüche 1-10 umfasst.

## Revendications

1. Procédé pour commander l'accès à un contenu stocké sur un réseau, dans lequel le procédé est exécuté dans un système de stockage en réseau utilisé dans un service de messagerie, dans lequel le procédé comprend les étapes suivantes :
recevoir (1001), par le système de stockage en réseau, une demande de création pour créer un dossier partagé envoyée par un premier utilisateur ;
stocker (1001), par le système de stockage en réseau, une règle d'accès du dossier partagé pour permettre à un second utilisateur d'écrire dans le dossier partagé, dans lequel la règle d'accès du dossier partagé est définie par le premier utilisateur ;
recevoir (1003), par le système de stockage en réseau, une demande de téléchargement provenant du second utilisateur pour télécharger un contenu multimédia dans le dossier partagé ;
autoriser (1004), par le système de stockage en réseau, le téléchargement du contenu multimédia vers le dossier partagé selon la règle d'accès après le succès d'authentification ;
stocker (1004), par le système de stockage en réseau, le contenu multimédia partagé par le second utilisateur dans le dossier partagé ;
recevoir (1005), par le système de stockage en réseau, une demande d'obtention pour obtenir le contenu multimédia dans le dossier partagé envoyée par le premier utilisateur ;
fournir (1006), par le système de stockage en réseau, le contenu multimédia au premier utilisateur.

2. Procédé selon la revendication 1, dans lequel le procédé comprend en outre l'étape suivante :
créer (1001), par le système de stockage en réseau, un dossier partagé pour le premier utilisateur.

3. Procédé selon la revendication 2, dans lequel le procédé comprend en outre l'étape suivante :
envoyer (1002), par le système de stockage en réseau, un message indiquant le succès de la création d'un dossier au premier utilisateur.

4. Procédé selon l'une quelconque des revendications 1 à 3, dans lequel la règle d'accès comprend en outre l'un quelconque ou une combinaison des points suivants :
accessible uniquement par le propriétaire d'un espace de stockage en réseau ;
opération de lecture seule disponible pour un contenu stocké sur un réseau ;
opération d'écriture disponible pour un contenu stocké sur un réseau ;
opération de suppression disponible pour un contenu stocké sur un réseau ; et
opération de modification disponible pour un contenu stocké sur une réseau.

5. Procédé selon l'une quelconque des revendications 1 à 4, dans lequel la demande d'accès comprend l'une quelconque ou une combinaison des demandes suivantes :
demande de lecture ;
demande d'écriture ;
demande de suppression ; et
demande de modification.

6. Procédé selon l'une quelconque des revendications 1 à 5, dans lequel le fait d'autoriser le téléchargement du contenu multimédia vers le dossier partagé selon la règle d'accès après le succès d'authentification comprend en outre les étapes suivantes :
comparer les informations du second utilisateur envoyant la demande de téléchargement et le message de demande de téléchargement avec la règle d'accès ; et
autoriser la demande de téléchargement lorsque les informations sur l'utilisateur et le message de demande sont conformes à la règle d'accès.

7. Procédé selon l'une quelconque des revendications 1 à 6, dans lequel le fait d'autoriser le téléchargement du contenu multimédia vers le dossier partagé selon la règle d'accès après le succès d'authentification comprend en outre l'étape suivante :
autoriser le téléchargement du contenu multimédia vers le dossier partagé lorsque l'authentification d'un mot de passe fourni par le second utilisateur est réussie.

8. Procédé selon l'une quelconque des revendications 1 à 7, dans lequel le procédé est utilisé dans un service de messagerie CPM.

9. Procédé selon l'une quelconque des revendications 1 à 8, dans lequel le premier utilisateur communique avec le système de stockage en réseau par l'intermédiaire d'un client terminal.

10. Procédé selon l'une quelconque des revendications 1 à 9, dans lequel le procédé est utilisé dans un service de messagerie instantanée.

11. Système de stockage en réseau (10), utilisé dans des services de messagerie, dans lequel le système comprend des moyens pour mettre en oeuvre le procédé selon l'une quelconque des revendications 1 à 10.
